(19) Europäisches Patentamt
European Patent Office
Office européen des brevets

(11) **EP 1 220 221 B1**

(12) **EUROPEAN PATENT SPECIFICATION**

(45) Date of publication and mention
of the grant of the patent:
**18.09.2013 Bulletin 2013/38**

(51) Int Cl.:
*G11B 21/10* (2006.01)    *G11B 7/095* (2006.01)
*G11B 5/596* (2006.01)

(21) Application number: **01310933.5**

(22) Date of filing: **28.12.2001**

(54) **Eccentricity compensation apparatus based on frequency response characteristics of actuator of disk drive servo system**

Einrichtung zur Kompensation von Exzentrizität, auf Frequenzgangeigenschaften des Aktors eines Plattenlaufwerkservosystems gegründet

Dispositif de compensation d'excentricité, basé sur les caractéristiques de réponse en fréquences du positionneur d'un système de servo d'un lecteur de disque

(84) Designated Contracting States:
**DE FR GB NL**

(30) Priority: **29.12.2000 KR 2000086283**

(43) Date of publication of application:
**03.07.2002 Bulletin 2002/27**

(73) Proprietor: **Samsung Electronics Co., Ltd.**
**Suwon-si, Gyeonggi-do, 443-742 (KR)**

(72) Inventors:
• **Cho, Seong-il,**
**2-1106 Guil Jungang Heights Apt.**
**Guro-gu,**
**Seoul (KR)**
• **Seo, Joong-eon**
**Uiwang-si,**
**Gyeonggi-do (KR)**
• **Jung, Soo-yul**
**Gunpo-si,**
**Gyeonggi-do (KR)**

(74) Representative: **Robinson, Ian Michael et al**
**Appleyard Lees**
**15 Clare Road**
**Halifax HX1 2HY (GB)**

(56) References cited:
EP-A- 0 306 151    JP-A- 06 203 390
US-A- 5 550 685    US-A- 6 147 467

**Description**

The present invention relates to eccentricity compensation in a disk drive servo system, and more particularly, to an eccentricity compensation apparatus of a disk drive servo system which can be effectively adapted to a variation in reproduction speed of a disk by adjusting the gain and phase of control data estimated at a specific reproduction speed and stored in a feedforward look-up table, based on the frequency response characteristics of an actuator.

Eccentricity occurs when the center of a disk track deviates from the axis of a spindle about which a disk rotates. The eccentricity acts as periodic disturbance on a disk drive system, thereby significantly degrading track following performance thereof. In particular, as speed at which a disk is reproduced ("disk reproduction speed") increases, eccentricity increasingly degrades the control performance of a disk drive system. Thus, in order to accurately trace a track at high reproduction speed, eccentricity needs to be effectively compensated for. A number of techniques have been developed to compensate for eccentricity.

US 6,417,467 discloses a servo loop for use in an optical disk drive which compensates for eccentricity of an optical disk by generating a compensation signal based on a predetermined transfer function of a position signal corresponding to the position of a pick up of the optical disk drive. This document discloses the precharacterising portion of the claims appended hereto.

US 5,550,685 discloses an apparatus for compensating for periodic perturbations within a disk drive, which includes a feedforward correction table.

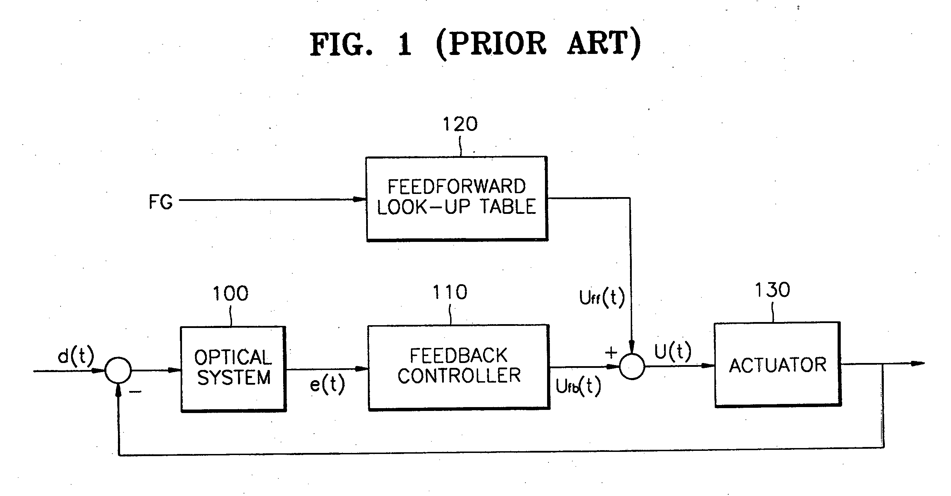

Figure 1 shows an example of a conventional disk drive servo system for compensating for eccentricity. Referring to Figure 1, the conventional disk drive servo system includes an optical system 100, a feedback controller 110, a feedforward look-up table 120, and an actuator 130. The optical system 100 detects an error e(t) between the actual position of a head on a disk and a reference head position d(t), which corresponds to a displacement of the actuator 130, and outputs the error e(t) detected. The feedback controller 110 performs compensation control according to the error e(t) to output an actuator drive control value $U_{fb}(t)$. The feedforward look-up table 120 outputs an actuator drive control value $U_{ff}(t)$ which is estimated and stored according to the phase of a spindle in order to compensate for eccentricity. The actuator 130 is moved to a position on the disk by a control value U(t) which is obtained by the actuator derive control values $U_{fb}(t)$ and $U_{ff}(t)$, output from the feedback controller 110 and the feedforward look-up table 120, respectively.

The conventional disk drive servo system compensates for eccentricity by storing a compensation value for eccentricity compensation in the feedforward look-up table 120 and outputting the result of summation of the compensation value and the control value output from the feedback controller 110 as the actuator drive control value. Eccentricity varies depending on the phase of a spindle.

Eccentricity present in the disk drive servo system has constant magnitude and varying frequency as disk reproduction speed changes. The impact of eccentricity upon the system due to changes in disk reproduction speed varies depending on the frequency response characteristics of the actuator 130. Thus, in order to effectively compensate for eccentricity, data of the feedforward look-up table 120 needs to be updated each time the disk reproduction speed changes. Since eccentricity becomes significantly larger at high reproduction speeds, the feedback controller 110 cannot appropriately perform a tracking control. In this case, data of the feedforward look-up table 120 cannot be updated, thereby making eccentricity compensation of the actuator 130 impossible.

It is an aim of the present invention to provide an eccentricity compensation apparatus for a disk drive servo system which can be effectively adapted to a variation in reproduction speed of a disk.

According to the present invention there is provided an apparatus as set forth in the appended claims. Preferred features of the invention will be apparent from the dependent claim, and the description which follows.

According to the present invention there is provided an eccentricity compensation apparatus for use in a disk drive servo system, the eccentricity compensation apparatus using frequency response characteristics of an actuator (200) for actuating a head to a position on a disk to read data on or reproduce data from the disk, the apparatus comprising an error detector that detects a position error between a reference head position and an actual position of the head on the disk; a first compensation controller that receives the position error from the error detector and changes the actual position of the head in order to compensate for the position error; characterised by a second compensation controller that generates and outputs a control value to compensate for eccentricity, wherein the control value varies depending on the phase of a spindle that rotates the disk; and a gain/phase adjuster (240) that adjusts the gain and phase of the control value output from the second compensation controller (230) according to a disk reproduction speed; wherein a drive signal of the actuator is obtained by summing together signals output from the first compensation controller (210) and the gain/phase adjuster.

The second compensation controller is a feedforward look-up table that stores control data estimated at a predetermined reproduction speed and to be used for eccentricity compensation through gain and phase adjustment.

The gain/phase adjuster adjusts the gain and phase of the control value output from the second compensation controller according to a reproduction speed based on the frequency response characteristics of the actuator.

For a better understanding of the invention, and to show how embodiments of the same may be carried into effect, reference will now be made, by way of example, to the accompanying diagrammatic drawings in which:

Figure 1 is a block diagram of a conventional disk drive servo system for compensating for eccentricity;

Figure 2 is a block diagram of an eccentricity compensation apparatus using the frequency response characteristics of an actuator of a disk drive servo system according to the present invention; and

Figures 3(a) and 3(b) are graphs showing examples of the frequency response characteristics of an actuator.

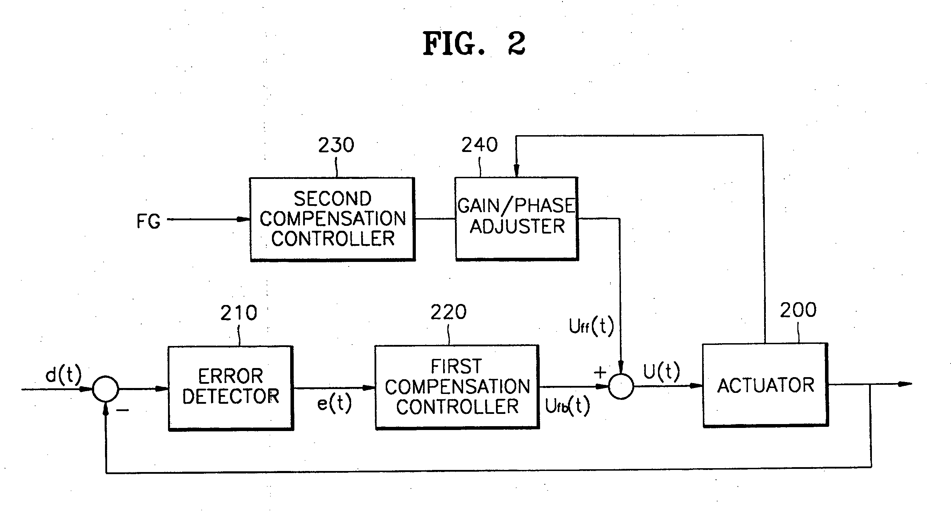

Referring to Figure 2, an eccentricity compensation apparatus is shown that uses the frequency response characteristics of an actuator 200 in a disk drive servo system. The eccentricity compensation apparatus includes, an error detector 210, a first compensation controller 220, a second compensation controller 230, and a gain/phase adjuster 240.

The actuator 200 determines the position of a head (a pickup head and the like) for recording data onto a disk or reproducing recorded data. Since the impact of eccentricity upon the system varies depending on disk reproduction speed, an appropriate compensation control for an error due to this eccentricity is needed in driving the actuator 200 to accurately follow a track. The error detector 210 detects an error e(t) (position error) between a reference head position d(t) and an actual position of the head on a disk. The first compensation controller 220 receives the position error e(t) from the error detector 210 and generates and outputs an actuator control value $U_{fb}(t)$ to compensate for the position error e(t) by changing the actual position of the head. The actuator control value $U_{fb}(t)$ output from the first compensation controller 220 is obtained by various possible control algorithms, generally by a phase lead-lag controller. The first compensation controller 220 serves as a feedback controller that receives a reference signal and receives an actual signal of the actuator 200, which corresponds to the actual position of the head, and performs a compensation control using the received signals. The second compensation controller 230 receives and stores control values for one period to compensate for an error of the actuator 200 caused by periodic disturbances such as eccentricity of the disk at a specific reproduction speed. Here, the control values refer to estimated values of the phase and gain characteristics of the actuator 200 at the specific reproduction speed to be used for eccentricity compensation at varying reproduction speeds. The second compensation controller 230 serves as a feedforward look-up table for pre-storing estimated compensation values determined from simulations, tests, or experience by estimating the gain and phase characteristics of the actuator 200 upon eccentricity at a specific reproduction speed, before or upon a compensation control is performed. The gain/phase adjuster 240 adjusts the phase and gain of an output signal from the second compensation controller 230 according to varying reproduction speeds based on the frequency response characteristics of the actuator 200 and outputs an adjusted value $U_{ff}(t)$. The actuator 200 maintains a constant phase and gain for actuating even if the reproduction speed changes so long as the reproduction speed is less than a predetermined value. However, when the reproduction speed is a predetermined value or greater, the gain decreases and phase lag increases. That is, the control characteristics of the actuator 200 significantly change at a reproduction speed greater than the predetermined value. The gain/phase adjuster 240 calculates the adjusted value $U_{ff}(t)$ by changing the gain and phase of the output value of the second compensation controller 230 based on the frequency response characteristics of the actuator 200 which are dependent on reproduction speed variations. The actuator 200 is driven according to a drive signal obtained by summation of the actuator control value $U_{fb}(t)$ output from the first compensation controller 220 and the adjusted value $U_{ff}(t)$ output from the gain/phase adjuster 240.

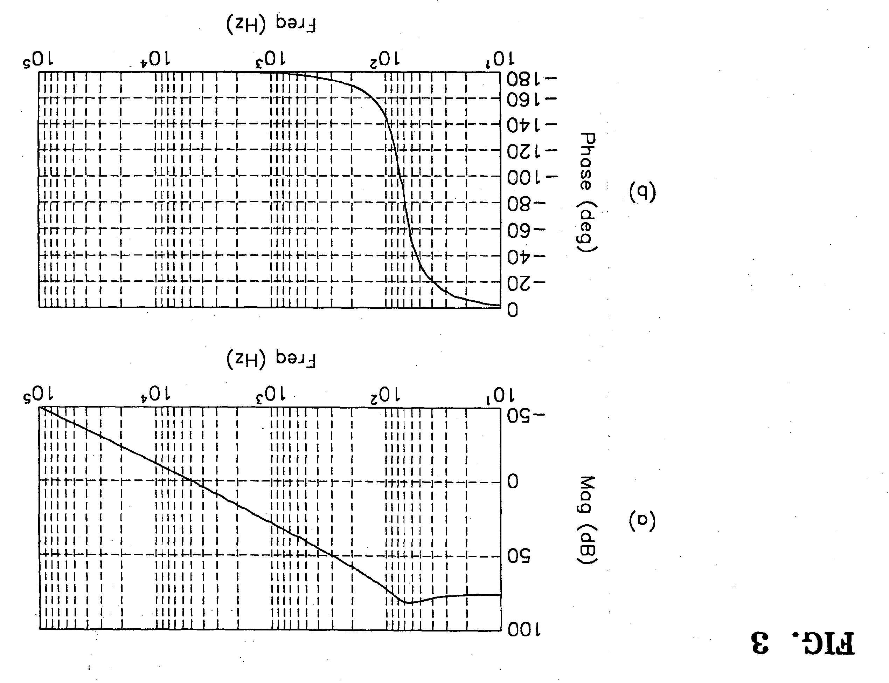

In Figure 3, (a) and (b) are graphical representations showing an example of frequency response characteristics of the actuator 200. Graphs (a) and (b) of Figure 3 show changes in gain and phase with respect to frequency. Even when disk reproduction speed changes, identifying the frequency response characteristics of the actuator 200 enables the second compensation controller 230 to calculate the adjusted value $U_{ff}(t)$ from the estimated compensation values stored therein even if they have been estimated at a low speed reproduction, for eccentricity compensation at varying reproduction speeds.

The operation of the eccentricity compensation apparatus of Figure 2 will now be described. Compensating for eccentricity using a feedforward look-up table obtained based on the phase of a spindle is implemented in various ways. One approach is disclosed in Korean Patent Application No. 2000-0049866 (filed August 26, 2000) which describes eccentricity compensation using learning control techniques. At a specific reproduction speed at which a feedback controller corresponding to the first compensation controller 220 of Figure 2 operates smoothly, control data in the feedforward look-up table for eccentricity compensation can be estimated in various ways using a tracking error signal. If control data of the feedforward look-up table for eccentricity compensation are accurately estimated, the magnitude of a tracking error is zero, and the feedforward look-up table can be obtained using Equation (1):

$$U_{ff}(s) = \frac{D(s)}{G(s)} \qquad \dots (1)$$

Here, $U_{ff}(s)$ and $D(s)$, which are the Laplace transforms for $U_{ff}(t)$ and $d(t)$, denote the control data of the feedforward look-up table and eccentricity, respectively, and $G(s)$ denotes a transfer function of the actuator 200. The eccentricity $D(s)$ has constant magnitude and phase, while only the frequency varies as disk reproduction speed changes. The transfer function $G(s)$ of the actuator 200 expresses the frequency response characteristics of the actuator 200 in which the gain is decreased and the phase is lagged with increased frequency. If the data $U_{ff}(s)$ of the feedforward look-up table estimated at a specific disk reproduction speed using Equation (1) are applied to reproduction at a different speed (usually a higher reproduction speed) for the reason that the gain and phase of the actuator upon eccentricity are the same at any reproduction speed, compensation for eccentricity at the higher reproduction speed is incorrect. This is because actual gain reduction and phase lag caused by the frequency response characteristics of the actuator 200 at that reproduction speed are not reflected. Thus, the control data of the feedforward look-up table estimated at a specific reproduction speed cannot be applied in the same manner if there is a large change in reproduction speed.

However, according to the present invention, the gain/phase adjuster 240 can compensate for gain reduction and phase lag in frequency response characteristics $G(s)$ of the actuator caused by reproduction speed changes based on control data in a feedforward look-up table estimated at a specific reproduction speed, without updating the control data in the feedforward look-up table each time reproduction speed changes. That is, it is possible to use control data in the feedforward look-up table estimated at a low reproduction speed for a high-speed reproduction. In this case, the gain/phase adjuster 240 compensates for gain reduction and phase lag due to frequency changes at varying reproduction speeds, that is, frequency response characteristics, of the actuator 200. The eccentricity compensation apparatus according to the present invention can simply compensate for eccentricity at varying reproduction speeds by adjusting control data estimated for eccentricity compensation at specific reproduction speed based on the frequency response characteristics of an actuator.

Although a few preferred embodiments have been shown and described, it will be appreciated by those skilled in the art that various changes and modifications might be made without departing from the scope of the invention, as defined in the appended claims.

### Claims

1. An eccentricity compensation apparatus for use in a disk drive servo system which can be adapted to a variation in reproduction speed, the eccentricity compensation apparatus using frequency response characteristics of an actuator (200) for actuating a head to a position on a disk to read data on or reproduce data from the disk, the apparatus comprising:

   an error detector (210) that detects a position error between a reference head position and an actual position of the head on the disk;
   a first compensation controller (220) serving as a feedback controller that receives the position error from the error detector (210) and changes the actual position of the head in order to compensate for the position error;
   a second compensation controller (230) that generates and outputs a control value to compensate for eccentricity, wherein the control value varies depending on the phase of a spindle that rotates the disk;
   **characterised in that**:

   said second compensation controller (230) is a feedforward look-up table that stores control data estimated at a predetermined reproduction speed and to be used for eccentricity compensation **at a different reproduction speed** through gain and phase adjustment;
   **the apparatus further comprising**
   a gain/phase adjuster (240) that calculates and adjusts the gain and phase of the control value output from the second compensation controller (230) according to **the** disk reproduction speed based on the frequency response characteristics of the actuator (200) which are dependent on reproduction speed variations;
   wherein the drive signal of the actuator is obtained by summing the signals output from the first compensation controller (210) and the gain/phase adjuster (240).

2. The apparatus of claim 1 wherein the different reproduction speed is higher than the predetermined reproduction speed.

## Patentansprüche

1. Exzentrizitätsausgleichsvorrichtung für die Verwendung in einem Plattenantriebs-Servosystem, das an eine Schwankung der Wiedergabegeschwindigkeit angepasst werden kann, wobei die Exzentrizitätsausgleichsvorrichtung eine Frequenzgangcharakteristik eines Aktors (200) verwendet, um einen Kopf an eine Position auf einer Platte zu bewegen, um von der Platte Daten zu lesen oder Daten wiederzugeben, wobei die Vorrichtung Folgendes umfasst:

   einen Fehlerdetektor (210), d e r einen Positionsfehler zwischen einer Referenzkopfposition und einer Ist-Position de s Kopfes au f de r Platte detektiert;
   eine erste Ausgleichssteuereinheit (220), die als eine Rückkopplungssteuereinheit dient, die den Positionsfehler von dem Fehlerdetektor (210) empfängt und die Ist-Position des Kopfes ändert, um den Positionsfehler auszugleichen;
   eine zweite Ausgleichssteuereinheit (230), die einen Steuerwert erzeugt und ausgibt, um die Exzentrizität auszugleichen, wobei sich der Steuerwert in Abhängigkeit von der Phase einer Spindel, die die Platte dreht, verändert;
   **dadurch gekennzeichnet, dass**:

   die zweite Ausgleichssteuereinheit (230) eine Vorwärtsregelungs-Nachschlagtabelle ist, die Steuerdaten speichert, die bei einer vorgegebenen Wiedergabegeschwindigkeit geschätzt werden und für den Exzentrizitätsausgleich bei einer anderen Wiedergabegeschwindigkeit durch Verstärkungs- und Phaseneinstellung verwendet werden sollen;

   wobei die Vorrichtung ferner Folgendes umfasst:

   eine Verstärkungs-/Phasen-Einstelleinrichtung (240), die die Verstärkung und die Phase des Steuerwerts, der von der Ausgleichssteuereinheit (230) ausgegeben wird, berechnet und in Übereinstimmung mit der Plattenwiedergabegeschwindigkeit anhand der Frequenzgangcharakteristik des Aktors (200), die von Wiedergabegeschwindig keitsschwankungen abhängt, einstellt;
   wobei das Antriebssignal des Aktors durch Summieren de r Signale, die von de r ersten Ausgleichssteuereinheit (210) und von der Verstärkungs-/Phasen-Einstelleinheit (240) ausgegeben werden, erhalten wird.

2. Vorrichtung nach Anspruch 1, wobei die andere Wiedergabegeschwindigkeit höher ist als die vorgegebene Wiedergabegeschwindigkeit.

## Revendications

1. Appareil de compensation d'excentricité destiné à être utilisé dans un servomécanisme de lecteur de disque susceptible de s'adapter à une variation de vitesse de reproduction, l'appareil de compensation d'excentricité utilisant des caractéristiques de réponse en fréquence d'un actionneur (200) pour actionner une tête vers une position sur un disque pour lire des données sur le disque ou reproduire des données depuis le disque, l'appareil comprenant :

   un détecteur d'erreur (210) qui détecte une erreur de position entre une position de référence de la tête et une position effective de la tête sur le disque ;
   un premier régulateur de compensation (220) servant de régulateur à réaction qui reçoit l'erreur de position provenant du détecteur d'erreur (210) et modifie la position effective de la tête afin de compenser l'erreur de position ;
   un deuxième régulateur de compensation (230) qui génère et fournit une valeur de régulation pour compenser l'excentricité, laquelle valeur de régulation varie en fonction de la phase d'une broche qui fait tourner le disque ;
   **caractérisé en ce que** :

   ledit deuxième régulateur de compensation (230) est une table à consulter d'action anticipatrice qui stocke des données de régulation estimées à une vitesse de reproduction préétablie et destinées à être utilisées pour la compensation d'excentricité à une vitesse de reproduction différente sur la base d'un réglage de gain et de phase ;

l'appareil comprenant en outre
une unité de réglage de gain/de phase (240) qui calcule et règle le gain et la phase de la valeur de régulation fournie par le deuxième régulateur de compensation (230) conformément à la vitesse de reproduction du disque en fonction des caractéristiques de réponse en fréquence de l'actionneur (200) qui dépendent de s variations de la vitesse de reproduction ;
le signal d'entraînement de l'actionneur étant obtenu par sommation des signaux fournis par le premier régulateur de compensation (210) et l'unité de réglage de gain/de phase (240).

2. Appareil selon la revendication 1, dans lequel la vitesse de reproduction différente est supérieure à la vitesse de reproduction préétablie.

# FIG. 1 (PRIOR ART)

# FIG. 2

FIG. 3

(a)

(b)

EP 1 220 221 B1

**EP 1 220 221 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6417467 B
- US 5550685 A
- KR 20000049866